# EUROPEAN PATENT APPLICATION

(11) **EP 4 443 027 A1**
(43) Date of publication of application: **09.10.2024**
(21) Application number: 22898687.3
(22) Date of filing: 28.11.2022
(51) Int. Cl.: F16J 15/34

(54) **SLIDING ELEMENT**

(30) Priority: 29.11.2021 JP 2021193625
(71) Applicant: Eagle Industry Co., Ltd., Minato-ku Tokyo 105-8587 (JP)
(72) Inventor: ONUMA Minori, Tokyo 105-8587 (JP); UCHIYAMA Ryosuke, Tokyo 105-8587 (JP); SUZUKI Hiroshi, Tokyo 105-8587 (JP); MIYAZAKI Sayaka, Tokyo 105-8587 (JP); NEGISHI Yuta, Tokyo 105-8587 (JP); KATORI Hikaru, Tokyo 105-8587 (JP); KANEZAWA Daiki, Tokyo 105-8587 (JP); HOSOE Takeshi, Tokyo 105-8587 (JP)
(74) Representative: WSL Patentanwälte Partnerschaft mbB
(86) International application number: PCT/JP2022/043746
(87) International publication number: WO 2023/095905

(57) **Abstract**

There is provided a sliding element capable of preventing a sealed fluid from leaking into a space on a leakage side regardless of whether a relative rotation direction is forward rotation or reverse rotation. A sliding element M includes a pair of sliding members 10 and 20 of which sliding surfaces 11 and 21 rotate and slide relative to each other. The sliding surface 11 is provided with introduction grooves 13 and 13' for low-speed rotation communicating with a space S2 on a sealed fluid F side. The sliding surface 11 is provided with a dynamic pressure generation groove 12 for high-speed rotation communicating with a space S1 on a leakage side. The sliding surface 11 further is further provided with a groove portion 14, 15 disposed on the sealed fluid side with respect to the dynamic pressure generation groove 12 and allowing a sealed fluid to flow between the introduction grooves 13 and 13' adjacent to each other.

## Description

### {TECHNICAL FIELD}

The present invention relates to a sliding element, for example, a sliding element including a pair of sliding members used for a shaft seal or a bearing.

### {BACKGROUND ART}

As a sliding element that prevents a leakage of a sealed fluid around a rotating shaft of a rotating machine, for example, there is known a mechanical seal in which sliding surfaces of a pair of sliding members slide relative to each other. In such a mechanical seal, in recent years, a reduction in energy loss caused by sliding has been desired for environmental measures and the like, and dynamic pressure generation grooves for separating the sliding surfaces from each other may be provided on a sliding surface.

For example, in a mechanical seal illustrated in Patent Citation 1, a plurality of introduction grooves communicating with a sealed fluid side and a plurality of spiral grooves as dynamic pressure generation grooves communicating with a leakage side are provided on a sliding surface of one sliding member. The introduction grooves extend from the sealed fluid side in a radially inward direction while being inclined in the other circumferential direction. In addition, the spiral grooves extend from the leakage side in a radially outward direction while being inclined in one circumferential direction.

When the relative rotation speed of the sliding member is low, the introduction grooves introduce a sealed fluid into a gap between the sliding surfaces. Accordingly, since a liquid film is formed between the sliding surfaces, the introduction grooves can contribute to improving lubricity between a pair of the sliding surfaces. In addition, the spiral grooves slightly suction gas on the leakage side. Since the gas prevents the sealed fluid from moving to the leakage side, the spiral grooves can contribute to preventing a leakage of the sealed fluid to the leakage side.

On one hand, when the relative rotation speed of the sliding member is high, in the spiral grooves that suction the gas on the leakage side, a positive pressure is generated at closed end portions located on a radially outer side of the sliding surface. Since the sliding surfaces are slightly separated from each other by the positive pressure, the spiral grooves can contribute to improving lubricity between the pair of sliding surfaces. In addition, similarly to when the relative rotation speed of the sliding member is low, the spiral grooves that suction the gas into the gap between the sliding surfaces can contribute to preventing a leakage of the sealed fluid to the leakage side.

### {CITATION LIST}

### {Patent Literature}

Patent Citation 1: WO 2018/051867 A (Page 10, FIG. 3)

### {SUMMARY OF INVENTION}

### {Technical Problem}

By the way, depending on the type of the rotating machine, the rotation direction may be switched according to the situation. Therefore, relative rotation between the sliding members is not limited to forward rotation, and a mechanical seal capable of handling reverse rotation has been desired. However, in the mechanical seal as disclosed in Patent Citation 1, when relative rotation between the sliding members is reverse rotation, the sealed fluid is supplied into the gap between the sliding surfaces from the introduction grooves and lubricity is ensured, but the sealed fluid supplied into the gap between the sliding surfaces flows into the spiral grooves and leaks to a space on the leakage side, which is a risk.

The present invention has been made in view of such problems, and an object of the present invention is to provide a sliding element capable of preventing a sealed fluid from leaking into a space on a leakage side regardless of whether a relative rotation direction is forward rotation or reverse rotation.

### {Solution to Problem}

In order to solve the foregoing problems, according to the present invention, there is provided a sliding element including: a pair of sliding members of which sliding surfaces rotate and slide relative to each other, wherein at least one of the sliding surfaces is provided with introduction grooves for low-speed rotation, each of the introduction grooves communicating with a space on a sealed fluid side, at least one of the sliding surfaces is provided with a dynamic pressure generation groove for high-speed rotation, the dynamic pressure generation groove communicating with a space on a leakage side, and the sliding surface provided with the introduction grooves is further provided with a groove portion disposed on the sealed fluid side with respect to the dynamic pressure generation groove and allowing a sealed fluid to flow between the introduction grooves adjacent to each other. According to the aforesaid feature of the present invention, when the relative rotation is forward rotation at low speed, the introduction grooves introduce the sealed fluid into a gap between the sliding surfaces. Accordingly, lubricity between the pair of sliding surfaces is improved. In addition, when the relative rotation is forward rotation at high speed, the dynamic pressure generation groove introduces a fluid on the leakage side into the gap between the sliding surfaces. Accordingly, lubricity between the pair of sliding surfaces is improved. On one hand, when the relative rotation is reverse rotation, the introduction grooves introduce the sealed fluid into the gap between the sliding surfaces. Accordingly, lubricity between the pair of sliding surfaces is improved. In addition, the groove portion allows the sealed fluid, which has flowed into one introduction groove, to efficiently flow into the adjacent introduction groove. Namely, the sealed fluid is collected in the introduction groove through the groove portion. In such a manner, the groove portion can contribute to preventing a leakage of the sealed fluid into the space on the leakage side through the dynamic pressure generation groove.

It may be preferable that the groove portion includes first grooves each extending from each of the introduction grooves and second grooves each extending from each of the introduction grooves in a direction opposite to a direction in which the first grooves extend. According to this preferable configuration, a positive pressure is generated in the first grooves or the second grooves according to the rotation direction. Accordingly, the first grooves or the second grooves can contribute to improving lubricity between the pair of sliding surfaces.

It may be preferable that, the first grooves and the second grooves extend in an arcuate shape. According to this preferable configuration, a dynamic pressure that is a radial component of positive pressure or negative pressure is less likely to be generated in the first grooves or the second grooves formed in an arcuate shape. For that reason, the first groove and the second groove facilitate the flow of the sealed fluid from one introduction groove into the adjacent introduction groove.

It may be preferable that an end portion of the first groove extending from each of the introduction grooves is disposed on the leakage side with respect to an end portion of the second groove extending from adjacent one of the introduction grooves. According to this preferable configuration, when the relative rotation is reverse rotation, the first groove can efficiently collect the sealed fluid that has flowed out of the second groove.

It may be preferable that the first groove extending from each of the introduction grooves is disposed to overlap with the second groove extending from adjacent one of introduction grooves in a radial directional view. According to this preferable configuration, when the relative rotation is reverse rotation, the first groove can more efficiently collect the sealed fluid that has flowed out of the second groove.

It may be preferable that the introduction grooves, the first grooves, and the second grooves are equal to each other in depth. According to this preferable configuration, regardless of whether the relative rotation is forward rotation or reverse rotation, the flow of the sealed fluid between the introduction groove and each of the first groove and the second groove becomes smooth.

It may be preferable that the one of the sliding members includes the introduction grooves for low-speed rotation, the dynamic pressure generation groove for high-speed rotation, and the groove portion. According to this preferable configuration, since the positions of the introduction grooves for low-speed rotation, the dynamic pressure generation groove for high-speed rotation, and the groove portion do not change even during relative rotation, the sealed fluid can smoothly flow into the adjacent introduction groove.

### {BRIEF DESCRIPTION OF DRAWINGS}

FIG. 1 is a longitudinal sectional view illustrating one example of a mechanical seal as a sliding element according to a first embodiment of the present invention.
FIG. 2 is a view of a sliding surface of a rotating seal ring in the first embodiment as viewed in an axial direction.
FIG. 3 is an enlarged view of the sliding surface of the rotating seal ring as viewed in the axial direction when the relative rotation is forward rotation at low speed in the first embodiment.
FIG. 4 is an enlarged view of the sliding surface of the rotating seal ring as viewed in the axial direction when the relative rotation is forward rotation at high speed in the first embodiment.
FIG. 5 is an enlarged view of the sliding surface of the rotating seal ring as viewed in the axial direction when the relative rotation is reverse rotation in the first embodiment.
FIG. 6 is a view of a sliding surface of a rotating seal ring included in a sliding element according to a second embodiment of the present invention as viewed in the axial direction.
FIG. 7 is a view of a sliding surface of a rotating seal ring included in a sliding element according to a third embodiment of the present invention as viewed in the axial direction.
FIG. 8 is a view of a sliding surface of a rotating seal ring included in a sliding element according to a fourth embodiment of the present invention as viewed in the axial direction.
FIG. 9 is a view of a sliding surface of a rotating seal ring included in a sliding element according to a fifth embodiment of the present invention as viewed in the axial direction.
FIG. 10 is a view of a sliding surface of a rotating seal ring included in a sliding element according to a sixth embodiment of the present invention as viewed in the axial direction.
FIG. 11 is a view of a sliding surface of a rotating seal ring included in a sliding element according to a seventh embodiment of the present invention as viewed in the axial direction.
FIG. 12 is a view of a sliding surface of a rotating seal ring included in a sliding element according to an eighth embodiment of the present invention as viewed in the axial direction.

### {DESCRIPTION OF EMBODIMENTS}

Modes for implementing a sliding element according to the present invention will be described below based on embodiments.

### {First embodiment}

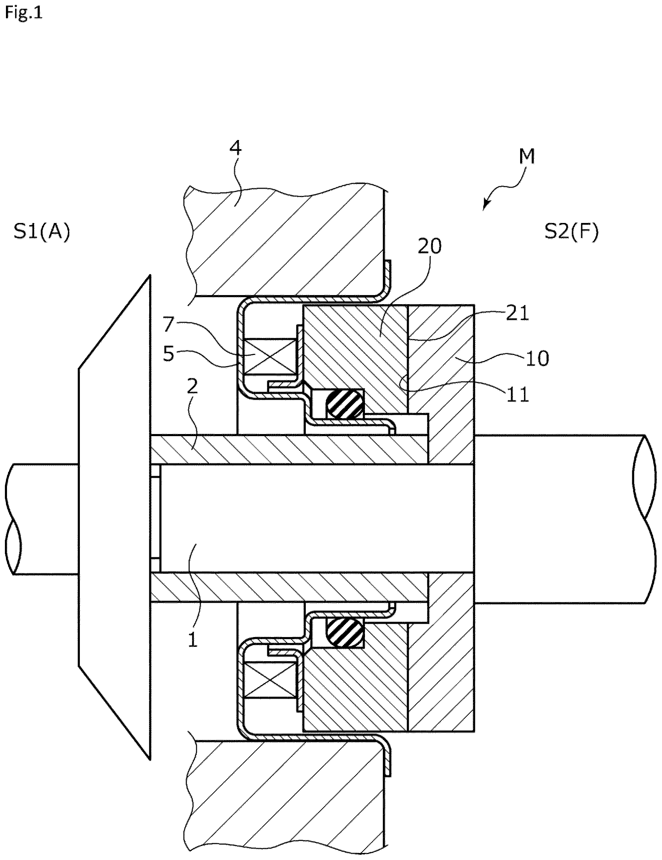

A sliding element according to a first embodiment of the present invention will be described with reference to FIGS. 1 to 5. Incidentally, in the present embodiment, a mechanical seal including a pair of a rotating seal ring and a stationary seal ring will be described as an example of a sliding element including a pair of sliding members. In addition, for convenience of description, in the drawings, grooves and the like formed on a sliding surface may be marked with dots.

As illustrated in FIG. 1, a mechanical seal M according to the present embodiment is a so-called inside mechanical seal that prevents a sealed fluid F existing in an outer space S2 from leaking into an inner space S1 in which atmosphere A exists.

In the present embodiment, the sealed fluid F is a high-pressure liquid. In addition, the atmosphere A is a gas having a lower pressure than the sealed fluid F. Namely, a radially inner side of the seal rings constituting the mechanical seal M is a leakage side (low-pressure side). In addition, a radially outer side is a sealed fluid side (high-pressure side). Incidentally, in the present invention, it is preferable to use a combination in which no problem occurs even when the fluid on the leakage side is mixed with the sealed fluid.

The mechanical seal M mainly includes a rotating seal ring 10 and a stationary seal ring 20. The rotating seal ring 10 has an annular shape, and is provided on a rotating shaft 1 via a sleeve 2 so as to be rotatable together with the rotating shaft 1.

The stationary seal ring 20 has an annular shape, and is provided on a seal cover 5 fixed to a housing 4 of an attached device, so as to be non-rotatable and movable in an axial direction.

The stationary seal ring 20 is biased in the axial direction by an elastic member 7. Accordingly, a sliding surface 11 of the rotating seal ring 10 and a sliding surface 21 of the stationary seal ring 20 slide in close contact with each other. Incidentally, the sliding surface 21 of the stationary seal ring 20 is a flat surface, and a groove or the like is not provided on the flat surface.

The rotating seal ring 10 and the stationary seal ring 20 are typically made of SiC (as an example of hard material) or a combination of SiC and carbon (as an example of soft material); however, the present invention is not limited to these materials, and any sliding material can be applied as long as the sliding material is used for mechanical seals. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As carbon, mixed carbon of a carbonaceous substance and a graphitic substance, resin-molded carbon, sintered carbon, and the like can be used. In addition, in addition to the above-described sliding materials, metal materials, resin materials, surface modification materials (e.g., coating materials), composite materials, and the like can also be applied.

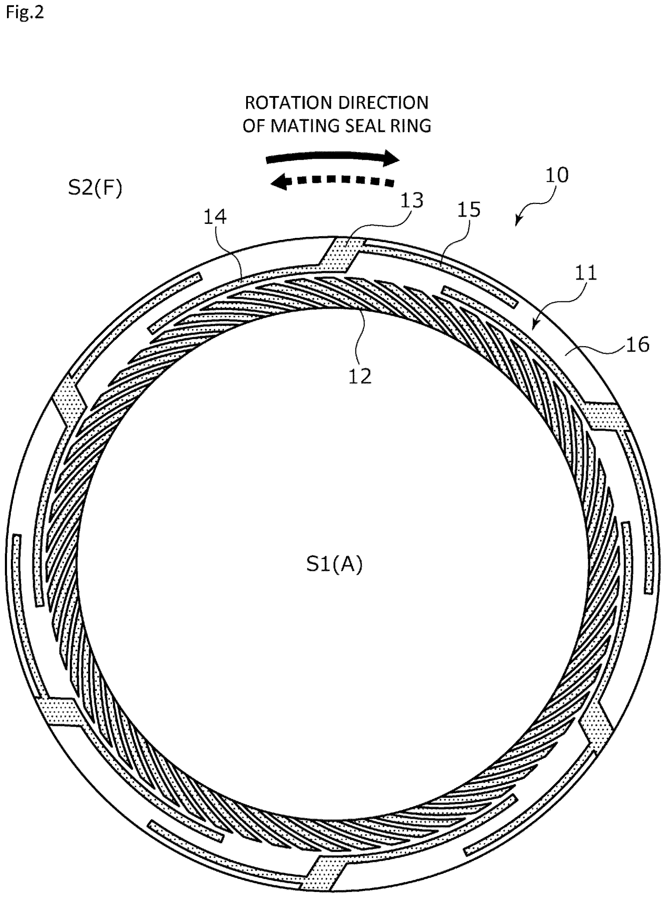

As illustrated in FIG. 2, the rotating seal ring 10 slides relative to the stationary seal ring 20 clockwise as illustrated by a solid arrow or counterclockwise illustrated by a dashed arrow. Hereinafter, the direction of the solid arrow and the direction of the dashed arrow will be described as a forward rotation direction and a reverse rotation direction of the rotating seal ring 10 that is a mating seal ring, respectively.

The sliding surface 11 of the rotating seal ring 10 is composed of a plurality of spiral grooves 12 as dynamic pressure generation grooves, a plurality of introduction grooves 13, a plurality of first grooves 14 that are part of a groove portion, a plurality of second grooves 15 that are part of the groove portion, and lands 16.

Hereinafter, since the plurality of spiral grooves 12 have the same shape, one spiral groove 12 will be described unless necessary. The same also applies to the introduction grooves 13, the first grooves 14, and the second grooves 15.

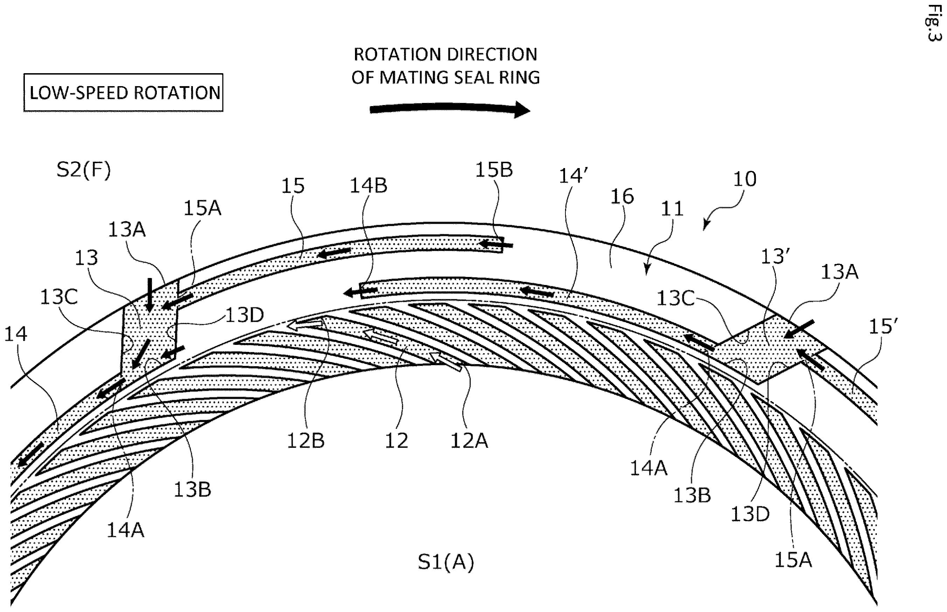

In addition, regarding the introduction grooves 13, for convenience of description, the introduction groove 13 illustrated on the left side of the drawing sheet of FIG. 3 may be referred to as one introduction groove 13, and the introduction groove 13 illustrated on the right side of the same drawing sheet with respect to the one introduction groove 13, in other words, the introduction groove 13 disposed adjacent to the one introduction groove 13 in a clockwise direction may be referred to as the other introduction groove 13'. In addition, the first groove 14 and the second groove 15 communicating with the other introduction groove 13' may be referred to as the other first groove 14' and the other second groove 15', respectively.

As illustrated in FIGS. 2 and 3, the spiral groove 12 extends in an arcuate shape from the opening end portion 12A toward the radially outer side while being inclined with a component in the reverse rotation direction. In addition, the spiral grooves 12 are evenly disposed on the radially inner side of the sliding surface 11.

The radially inner side of the spiral groove 12 is an opening end portion 12A communicating with the inner space S1. The radially outer side of the spiral groove 12 is a closed end portion 12B that is closed. The depth of the spiral groove 12 is constant in an extension direction.

The introduction groove 13 extends in a parallelogram shape from the opening end portion 13A toward the radially inner side while being inclined in the reverse rotation direction. In addition, the introduction grooves 13 are evenly disposed on the radially outer side of the sliding surface 11.

The opening end portion 13A on the radially outer side of the introduction groove 13 communicates with the outer space S2. The radially inner side of the introduction groove 13 is a radially inner-side wall 13B. A reverse rotation direction side of the introduction groove 13 is a reverse rotation-side wall 13C. A forward rotation direction side of the introduction groove 13 is a forward rotation-side wall 13D. The depth of the introduction groove 13 is constant in an extension direction.

The reverse rotation-side wall 13C extends from the radially outer side toward the radially inner side while being inclined in the reverse rotation direction. In addition, the forward rotation-side wall 13D is disposed to face the reverse rotation-side wall 13C, and extends substantially parallel thereto.

The first groove 14 is an arcuate groove extending from an opening end portion 14A in the reverse rotation direction concentrically with the rotating seal ring 10. In addition, the first grooves 14 are evenly disposed on the radially outer side with respect to the radial center of the sliding surface 11 and the spiral grooves 12.

The forward rotation direction side of the first groove 14 is the opening end portion 14A communicating with a radially inner-side end portion of the reverse rotation-side wall 13C of the introduction groove 13. In addition, a radially inner-side wall of the first groove 14 is continuous with the radially inner-side wall 13B of the introduction groove 13. In other words, the first groove 14 is formed at a position that is most separated from the outer space S2 among the grooves 13, 14, and 15 communicating with the outer space S2, to allow the sealed fluid F to flow between the outer space S2 and the first groove 14. The reverse rotation direction side of the first groove 14 is a closed end portion 14B that is closed. The depth of the first groove 14 is constant in an extension direction.

Incidentally, since the introduction groove 13 and the first groove 14 are continuous with each other, in FIGS. 3 to 6, for convenience of description, the opening end portion 14A of the first groove 14 is illustrated by a two-dot chain line. The same also applies to an opening end portion 15A of the second groove 15.

The second groove 15 is an arcuate groove extending from the opening end portion 15A in the forward rotation direction, namely, in a direction opposite to the first groove 14 concentrically with the rotating seal ring 10. In addition, the second grooves 15 are evenly disposed on the radially outer side with respect to the first groove 14.

The reverse rotation direction side of the second groove 15 is the opening end portion 15A communicating with a region near the center of the radially outer side of the forward rotation-side wall 13D of the introduction groove 13. The forward rotation direction side of the second groove 15 is a closed end portion 15B that is closed. The depth of the second groove 15 is constant in an extension direction.

In addition, the spiral groove 12, the introduction groove 13, the first groove 14, and the second groove 15 have substantially the same depth. For that reason, the spiral groove 12, the introduction groove 13, the first groove 14, and the second groove 15 are marked with the same density of dots in FIGS. 2 to 5.

In addition, the closed end portion 15B of one second groove 15 is disposed on the radially outer side with respect to the closed end portion 14B of the other first groove 14' to overlap the circumferential center of the other first groove 14' in a radial direction.

Accordingly, the closed end portion 14B of the other first groove 14' is closer to the one introduction groove 13 than the closed end portion 15B of the second groove 15 in a circumferential direction. In addition, the closed end portion 15B of the one second groove 15 is closer to the other introduction groove 13' than the closed end portion 14B of the other first groove 14' in the circumferential direction.

In addition, portions of the sliding surface 11 other than the spiral grooves 12, the introduction grooves 13, the first grooves 14, and the second grooves 15 are the lands 16 having flat surfaces disposed in the same plane. The flat surfaces of the lands 16 function as sliding surfaces that substantially slide against the sliding surface 21 of the stationary seal ring 20.

Next, the prevention of a leakage of the sealed fluid F into the inner space S1 by the mechanical seal M will be described with reference to FIGS. 3 to 5.

First, a case where the rotation of the rotating seal ring 10 is stopped will be described. The stationary seal ring 20 is biased to a rotating seal ring 10 side by the elastic member 7. For that reason, the sliding surfaces 11 and 21, in more detail, the lands 16 of the sliding surface 11 and the sliding surface 21 are in contact with each other.

Accordingly, the mechanical seal M prevents the sealed fluid F from leaking from the outer space S2 into the inner space S1.

On one hand, the atmosphere A flows into the spiral groove 12 from the inner space S1 through the opening end portion 12A.

On the other hand, the sealed fluid F flows into the introduction groove 13 from the outer space S2 through the opening end portion 13A. In addition, the sealed fluid F flows into the first groove 14 from the introduction groove 13 through the opening end portion 14A. Similarly, the sealed fluid F flows into the second groove 15 from the introduction groove 13 through the opening end portion 15A.

Next, the operation of the mechanical seal M when the rotating seal ring 10 rotates forward at low speed will be described.

Part of the sealed fluid F flowing into the introduction groove 13 is supplied from the introduction groove 13 into a gap between the sliding surfaces 11 and 21. In detail, the sealed fluid F in the introduction groove 13 is supplied into the gap between the sliding surfaces 11 and 21 by receiving a shear force in the rotation direction. As described above, even when the rotating seal ring 10 is stopped, the sealed fluid F flows into the introduction groove 13. For that reason, when the rotating seal ring 10 starts rotating, the sealed fluid F is sufficiently supplied into the gap between the sliding surfaces 11 and 21. On one hand, the sealed fluid F is supplied into the introduction groove 13 from the outer space S2 through the opening end portion 13A. For that reason, a sufficient amount of the sealed fluid F is retained in the introduction groove 13.

Here, the sealed fluid F between the sliding surfaces 11 and 21 flows to a counterclockwise direction side with respect to the sliding surface 11, namely, in a direction opposite to the rotation direction of the rotating seal ring 10 due to the shear force generated by relative sliding between the sliding surfaces 11 and 21. Incidentally, such a relative flow of the fluid is simply referred to as the flow of the fluid in the following description.

In the first groove 14 (also refer to the first groove 14' in FIG. 3), as illustrated by black arrows, the sealed fluid F flows toward the closed end portion 14B of the first groove 14. At this time, the sealed fluid F flows along an arc that is concentric with the sliding surface 11, and along the first groove 14 formed in an arcuate shape. Accordingly, a circumferential component of dynamic pressure is mainly generated in the first groove 14. In other words, a radial component of dynamic pressure is less likely to be generated in the first groove 14.

Then, as illustrated by black arrows, the sealed fluid F flowing along the first groove 14 flows into gaps between the lands 16 of the sliding surface 11 and the sliding surface 21 from the closed end portion 14B. Accordingly, a positive pressure is generated at the closed end portion 14B. Incidentally, positive pressure in the present embodiment refers to a relatively higher positive pressure than the ambient pressure.

On one hand, as illustrated by black arrows, the sealed fluid F is supplied into the first groove 14 from the introduction groove 13 through the opening end portion 14A. For that reason, a sufficient amount of the sealed fluid F is retained in the first groove 14.

In addition, part of the sealed fluid F in the first groove 14 is also slightly supplied into the gap between the sliding surfaces 11 and 21 from an opening end portion 14A side rather than the closed end portion 14B of the first groove 14.

In the second groove 15 (also refer to the second groove 15' in FIG. 3), as illustrated by black arrows, the sealed fluid F flows toward the opening end portion 15A of the second groove 15. At this time, the sealed fluid F flows along an arc that is concentric with the sliding surface 11, and along the second groove 15 formed in an arcuate shape. Accordingly, a radial component of dynamic pressure is less likely to be generated in the second groove 15.

Then, as illustrated by black arrows, the sealed fluid F flowing along the second groove 15 flows into the introduction groove 13 through the opening end portion 15A.

On one hand, a negative pressure is generated at the closed end portion 15B of the second groove 15. Accordingly, as illustrated by black arrows, part of the sealed fluid F between the lands 16 of the sliding surface 11 and the sliding surface 21 flows into the second groove 15 from the closed end portion 15B. For that reason, a sufficient amount of the sealed fluid F is retained in the second groove 15. Incidentally, negative pressure in the present embodiment refers to a relatively lower negative pressure than the ambient pressure.

In addition, part of the sealed fluid F in the second groove 15 is also slightly supplied into the gap between the sliding surfaces 11 and 21 from an opening end portion 15A side rather than the closed end portion 15B of the second groove 15.

As described above, in addition to the supply of the sealed fluid F from the introduction groove 13, the sealed fluid F is supplied into the gap between the sliding surfaces 11 and 21 from the first groove 14 and the second groove 15. For that reason, compared to the configuration in which only the introduction grooves 13 are provided as in Patent Citation 1, the efficiency of forming a liquid film is higher.

In addition, since the positive pressure is generated at the closed end portion 14B of the first groove 14, the mechanical seal M further facilitates the introduction of the sealed fluid F into the gap between the sliding surfaces 11 and 21. On the other hand, since the negative pressure is generated at the closed end portion 15B of the second groove 15, the mechanical seal M prevents the sliding surfaces 11 and 21 from being excessively separated from each other.

In addition, the closed end portion 14B of the other first groove 14' is disposed close to the one introduction groove 13. For that reason, the sealed fluid F supplied into the gap between the sliding surfaces 11 and 21 from the closed end portion 14B moves by a small amount in the radial direction. As a result, the sealed fluid F flows into the one introduction groove 13 located on a downstream side in the flow direction. Accordingly, the other first groove 14' enables the sealed fluid F to be efficiently collected in the one introduction groove 13.

In addition, the introduction groove 13 inclined in the reverse rotation direction from the radially outer side toward the radially inner side easily guides the sealed fluid F, which attempts to move in the reverse rotation direction from an opening end portion 13A side of the introduction groove 13, into the first groove 14 using the reverse rotation-side wall 13C. As a result, the positive pressure is stably generated at the closed end portion 14B.

Further, the majority of the sealed fluid F that has flowed into the introduction groove 13 through the opening end portion 15A of the second groove 15 flows into the first groove 14 or returns to the outer space S2 from the opening end portion 13A of the introduction groove 13. Accordingly, the sealed fluid F is less likely to stagnate in the second groove 15. As a result, the negative pressure is stably generated at the closed end portion 15B.

In addition, in the inside mechanical seal, the sealed fluid F having a higher specific gravity than the atmosphere A is easily pushed out into the outer space S2 by a centrifugal force. For that reason, the second groove 15 disposed on the radially outer side easily collects the sealed fluid F supplied into the gap between the sliding surfaces 11 and 21.

On one hand, in the spiral groove 12, as illustrated by white arrows, the atmosphere A moves to the closed end portion 12B, and a positive pressure is generated at the closed end portion 12B. Accordingly, since the atmosphere A flows into the gap between the sliding surfaces 11 and 21, the sealed fluid F in the vicinity of the spiral groove 12 returns to the radially outer side.

Accordingly, as schematically illustrated by a two-dot chain line in FIG. 3, a liquid film is formed on the radially outer side of a circumferential region along the closed end portions 12B of the spiral grooves 12, and an air film is formed on the radially inner side.

As described above, when the rotating seal ring 10 rotates at low speed, the mechanical seal M prevents the sealed fluid F from leaking into the inner space S1. In addition, lubricity between the sliding surfaces 11 and 21 can be ensured, and wear between the sliding surfaces 11 and 21 can be suppressed.

Next, when the rotating seal ring 10 rotates forward at high speed, the prevention of a leakage of the sealed fluid F into the inner space S1 by the mechanical seal M will be described. Incidentally, descriptions that overlap with those of low-speed rotation will be omitted or simplified.

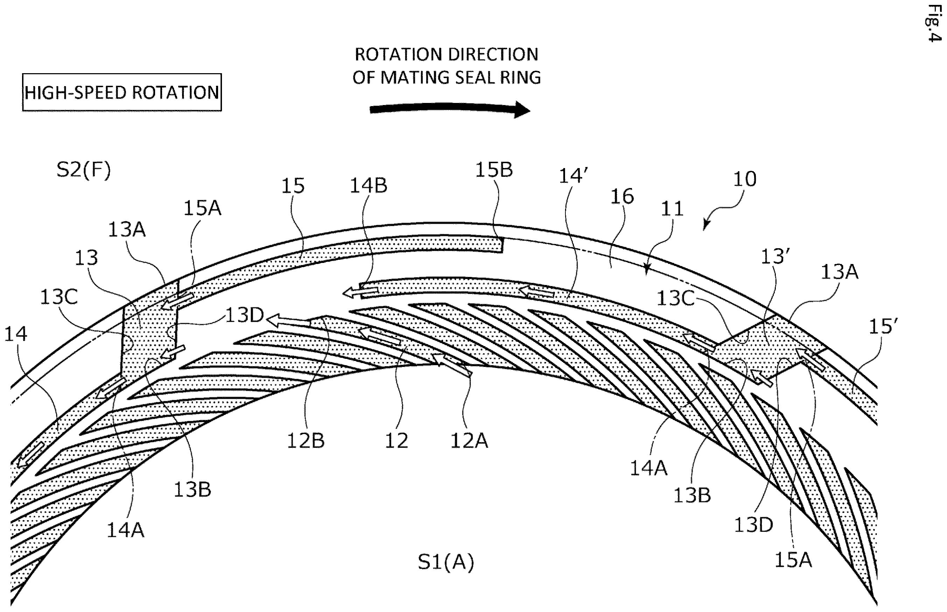

As illustrated in FIG. 4, a higher positive pressure than when the rotation is performed at low speed described above is generated at the closed end portion 12B of the spiral groove 12. Accordingly, as illustrated by white arrows, the atmosphere A supplied into the gap between the sliding surfaces 11 and 21 is supplied farther to the radially outer side than when the rotation is performed at low speed. Then, the atmosphere A flows into the introduction groove 13, the first groove 14, and the second groove 15.

On the other hand, when forward rotation is performed at low speed, the majority of the sealed fluid F supplied into the gap between the sliding surfaces 11 and 21 is pushed and discharged into the outer space S2 by the atmosphere A.

For that reason, the atmosphere A flows into the gaps between the lands 16 of the sliding surface 11 and the sliding surface 21 at the closed end portion 14B of the first groove 14. Similarly, the atmosphere A is collected into the second groove 15 at the closed end portion 15B of the second groove 15. Then, the majority of the atmosphere A collected in the second groove 15 flows into the first groove 14 through the introduction groove 13.

Accordingly, as schematically illustrated by a two-dot chain line in FIG. 4, a liquid film and an air film are formed with a circumferential region as a boundary, the circumferential region being along radially outer ends of the second grooves 15.

As described above, when the rotating seal ring 10 rotates at high speed, using the air film, the mechanical seal M can ensure lubricity between the sliding surfaces 11 and 21, and can suppress wear between the sliding surfaces 11 and 21.

Next, an operation when the rotating seal ring 10 rotates reverse, particularly, the prevention of a leakage of the sealed fluid F into the inner space S1 will be described. Incidentally, descriptions that overlap with those of the case of forward rotation will be omitted or simplified.

Similarly to the case of forward rotation, the sealed fluid F from the introduction groove 13, the first groove 14, and the second groove 15 is supplied into the gap between the sliding surfaces 11 and 21.

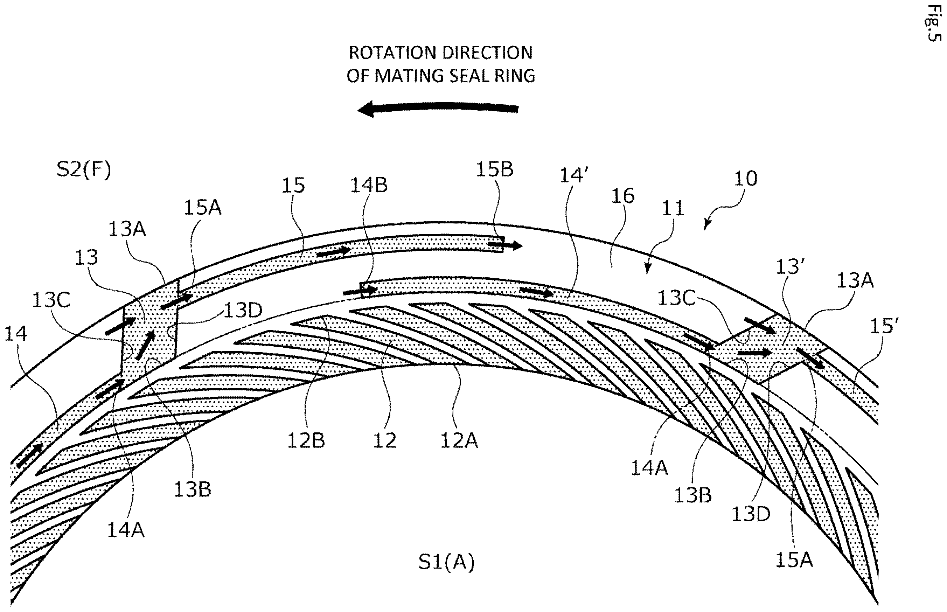

As illustrated in FIG. 5, the sealed fluid F flowing into the gap between the sliding surfaces 11 and 21 flows to a clockwise direction side with respect to the sliding surface 11, namely, in a direction opposite to the rotation direction of the rotating seal ring 10.

In the second groove 15 (also refer to the second groove 15' in FIG. 5), as illustrated by black arrows, the sealed fluid F flows toward the closed end portion 15B of the second groove 15. Accordingly, a radial component of dynamic pressure is less likely to be generated in the second groove 15.

Then, as illustrated by black arrows, the sealed fluid F flowing along the second groove 15 flows into the gaps between the lands 16 of the sliding surface 11 and the sliding surface 21 from the closed end portion 15B. Accordingly, a positive pressure is generated at the closed end portion 15B.

On one hand, as illustrated by black arrows, the sealed fluid F is supplied into the second groove 15 from the introduction groove 13 through the opening end portion 15A. For that reason, a sufficient amount of the sealed fluid F is retained in the second groove 15.

In the first groove 14 (also refer to the first groove 14' in FIG. 5), as illustrated by black arrows, the sealed fluid F flows toward the opening end portion 14A of the first groove 14. Accordingly, a radial component of dynamic pressure is less likely to be generated in the first groove 14.

Then, as illustrated by black arrows, the sealed fluid F flowing along the first groove 14 flows into the introduction groove 13 through the opening end portion 14A.

On one hand, a negative pressure is generated at the closed end portion 14B of the first groove 14. Accordingly, as illustrated by black arrows, part of the sealed fluid F between the lands 16 of the sliding surface 11 and the sliding surface 21 flows into the first groove 14 from the closed end portion 14B. For that reason, a sufficient amount of the sealed fluid F is retained in the first groove 14.

In addition, the sealed fluid F in the introduction groove 13 is easily supplied into the second groove 15 due to the positive pressure generated in the second groove 15.

For that reason, compared to the configuration in which only the introduction grooves 13 are provided as in Patent Citation 1, the amount of the sealed fluid F flowing into a radially inner-side wall 13B side of the introduction groove 13 per unit time becomes less. Accordingly, in the mechanical seal M, the sealed fluid F is less likely to leak into the inner space S1.

In addition, the closed end portion 15B of the one second groove 15 is disposed close to the other introduction groove 13'. For that reason, the sealed fluid F supplied into the gap between the sliding surfaces 11 and 21 from the closed end portion 15B moves by a small amount in the radial direction. As a result, the sealed fluid F flows into the other introduction groove 13' located on a downstream side in the flow direction. Accordingly, the one second groove 15 enables the sealed fluid F to be efficiently collected in the other introduction groove 13'.

In addition, even when the sealed fluid F that has flowed into the gap between the sliding surfaces 11 and 21 from the closed end portion 15B of the one second groove 15 flows to the radially inner side, the sealed fluid F flows into the other first groove 14'. Accordingly, the sealed fluid F flows through the other first groove 14', and is collected into the other introduction groove 13'.

Similarly, the closed end portion 14B of the other first groove 14' is disposed at the circumferential center of the one second groove 15. For that reason, the other first groove 14' can collect the sealed fluid F over a wide range, which is supplied into the gap between the sliding surfaces 11 and 21 not only from the closed end portion 15B of the one second groove 15 but also from the opening end portion 15A side rather than the closed end portion 15B.

The sealed fluid F supplied into the gap between the sliding surfaces 11 and 21 on the radially inner side of the one introduction groove 13 with respect to the second groove 15 is collected due to the negative pressure generated at the closed end portion 14B of the other first groove 14' disposed on the downstream side in the flow direction.

In addition, the closed end portion 14B of the other first groove 14' is disposed close to the one introduction groove 13. Accordingly, the other first groove 14' can efficiently collect the sealed fluid F directly supplied to the gap between the sliding surfaces 11 and 21 from the one introduction groove 13.

In addition, the introduction groove 13 inclined in the forward rotation direction from the radially inner side toward the radially outer side easily guides the sealed fluid F, which attempts to move in the forward rotation direction from a first groove 14 side, into the second groove 15 using the forward rotation-side wall 13D. Accordingly, the sealed fluid F easily flows to the opening end portion 13A side from the vicinity of the radially inner-side wall 13B closest to the spiral groove 12 in the introduction groove 13.

Further, the sealed fluid F that has flowed into the introduction groove 13 through the first groove 14 flows into the second groove 15 or returns to the outer space S2 from the opening end portion 13A of the introduction groove 13. Accordingly, the sealed fluid F is less likely to stagnate in the first groove 14. As a result, the negative pressure is stably generated at the closed end portion 14B.

As described above, when the rotating seal ring 10 rotates reverse, the mechanical seal M prevents the sealed fluid F from leaking into the inner space S1. In addition, lubricity between the sliding surfaces 11 and 21 can be ensured, and wear between the sliding surfaces 11 and 21 can be suppressed.

The mechanical seal M of the present embodiment configured as described above allows the sealed fluid F, which has flowed into the one introduction groove 13 through the second groove 15 and the other first groove 14', to more efficiently flow into the other introduction groove 13' compared to the configuration in which only the lands are formed between the adjacent introduction grooves as in Patent Citation 1.

Accordingly, when the rotating seal ring 10 rotates reverse, the sealed fluid F supplied into the gap between the sliding surfaces 11 and 21 is collected in the other introduction groove 13' through the one second groove 15 and the other first groove 14'. In such a manner, the first grooves 14, 14', ... and the second grooves 15, 15', ... can contribute to preventing a leakage of the sealed fluid F into the inner space S1 through the spiral grooves 12.

In addition, the first grooves 14, 14', ... and the second grooves 15, 15', ... are less likely to generate a radial component of dynamic pressure in both rotation directions. In addition, the introduction groove 13 is disposed in the extension direction of the first groove 14 and the second groove 15. For that reason, the other first groove 14' and the one second groove 15 facilitates the flow of the sealed fluid F, which has flowed into the one introduction groove 13, into the other introduction groove 13'.

In addition, the introduction groove 13, the first groove 14, and the second groove 15 has substantially the same depth as described above. For that reason, regardless of whether the rotation direction of the rotating seal ring 10 is forward rotation or reverse rotation, the flow of the sealed fluid F between the introduction groove 13 and each of the first groove 14 and the second groove 15 becomes smooth.

In addition, the spiral groove 12, the introduction groove 13, the first groove 14, and the second groove 15 are formed on the rotating seal ring 10. For that reason, the positions of the spiral groove 12, the introduction groove 13, the first groove 14, and the second groove 15 do not change even during relative rotation, so that the sealed fluid F that has flowed into the introduction groove 13 can smoothly flow into the other introduction groove 13' through the first groove 14 and the second groove 15.

Compared to a configuration in which the spiral groove 12, the introduction groove 13, the first groove 14, and the second groove 15 are formed on the stationary seal ring 20, dynamic pressures are more likely to be generated since the rotational force of the rotating seal ring 10 directly affects the sealed fluid F flowing into the spiral groove 12, the introduction groove 13, the first groove 14, and the second groove 15.

Incidentally, in the present embodiment, the configuration in which the spiral groove 12, the introduction groove 13, the first groove 14, and the second groove 15 have substantially the same depth has been described; however, the present invention is not limited thereto, and the depths may be changed as appropriate.

In addition, the depth of the spiral groove 12, the introduction groove 13, the first groove 14, and the second groove 15 has been described as being constant in the extension directions; however, the present invention is not limited thereto, and the depth may change gradually or may change stepwise.

### {Second embodiment}

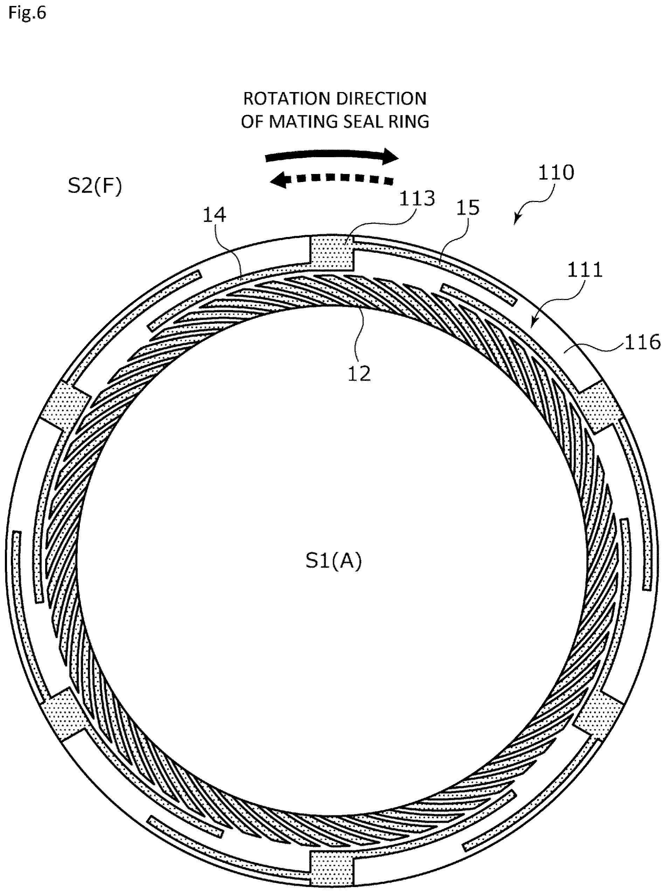

Next, a sliding element according to a second embodiment of the present invention will be described with reference to FIG. 6. Incidentally, the description of configurations that are the same as and overlap with the configurations of the first embodiment will be omitted.

A sliding surface 111 of a rotating seal ring 110 of the second embodiment is composed of a plurality of the spiral grooves 12, a plurality of introduction grooves 113, a plurality of the first grooves 14, a plurality of the second grooves 15, and lands 116.

The introduction groove 113 is a rectangular groove extending from an opening end portion communicating with the outer space S2, in a radially inward direction.

Accordingly, regardless of whether the rotating seal ring 110 rotates forward or reverse, substantially the same amount of the sealed fluid F is supplied into the introduction groove 113 from the outer space S2. For that reason, regardless of whether the rotating seal ring 110 rotates forward or reverse, the introduction groove 113 stably and easily ensures lubricity between the sliding surfaces 111 and 21.

In such a manner, the shape of the introduction grooves may be changed as appropriate.

### {Third embodiment}

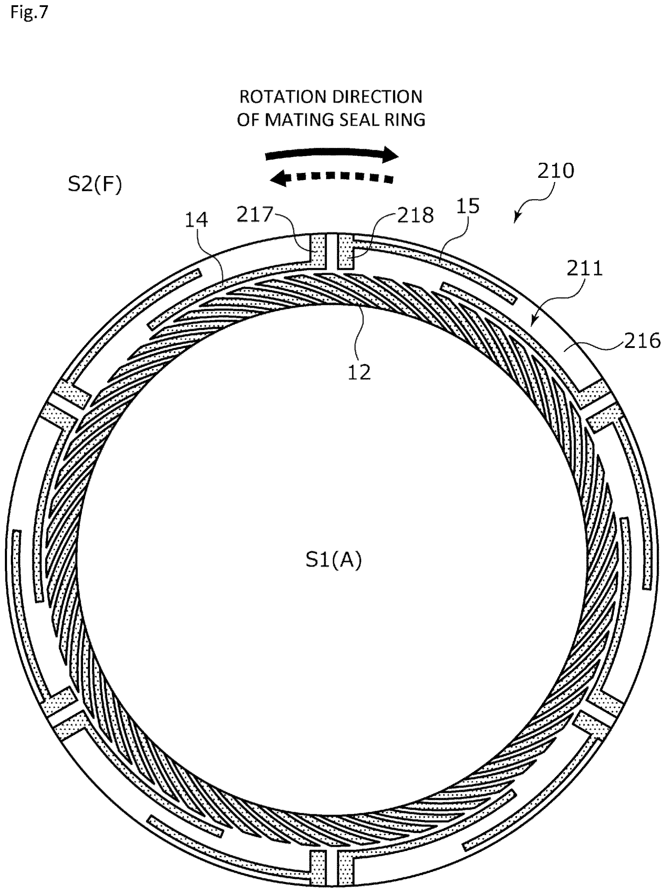

Next, a sliding element according to a third embodiment of the present invention will be described with reference to FIG. 7. Incidentally, the description of configurations that are the same as and overlap with the configurations of the first and second embodiments will be omitted.

A sliding surface 211 of a rotating seal ring 210 of the third embodiment is composed of a plurality of the spiral grooves 12, a plurality of first introduction grooves 217, a plurality of second introduction grooves 218, a plurality of the first grooves 14, a plurality of the second grooves 15, and lands 216.

The first introduction groove 217 is a rectangular groove extending from an opening end portion communicating with the outer space S2, in the radially inward direction. In addition, the first groove 14 communicates with the first introduction groove 217.

The second introduction groove 218 is a rectangular groove extending from an opening end portion communicating with the outer space S2, in the radially inward direction. In addition, the second groove 15 communicates with the second introduction groove 218.

Accordingly, when the rotating seal ring 210 rotates forward, the sealed fluid F is supplied into the first groove 14 through the first introduction groove 217. In addition, the sealed fluid F returns to the outer space S2 from the second groove 15 through the first introduction groove 217.

In such a manner, a flow direction of the sealed fluid F in the first introduction groove 217 and a flow direction of the sealed fluid F in the second introduction groove 218 can be made different from each other.

For that reason, the first introduction groove 217 and the second introduction groove 218 that do not communicate with each other can prevent a dynamic pressure generated in one of the first groove 14 and the second groove 15 from interfering with the sealed fluid F in the other.

In such a manner, the introduction groove may be divided into two or more grooves. In other words, the disposition may be such that only one of the first groove and the second groove communicates with one introduction groove.

### {Fourth embodiment}

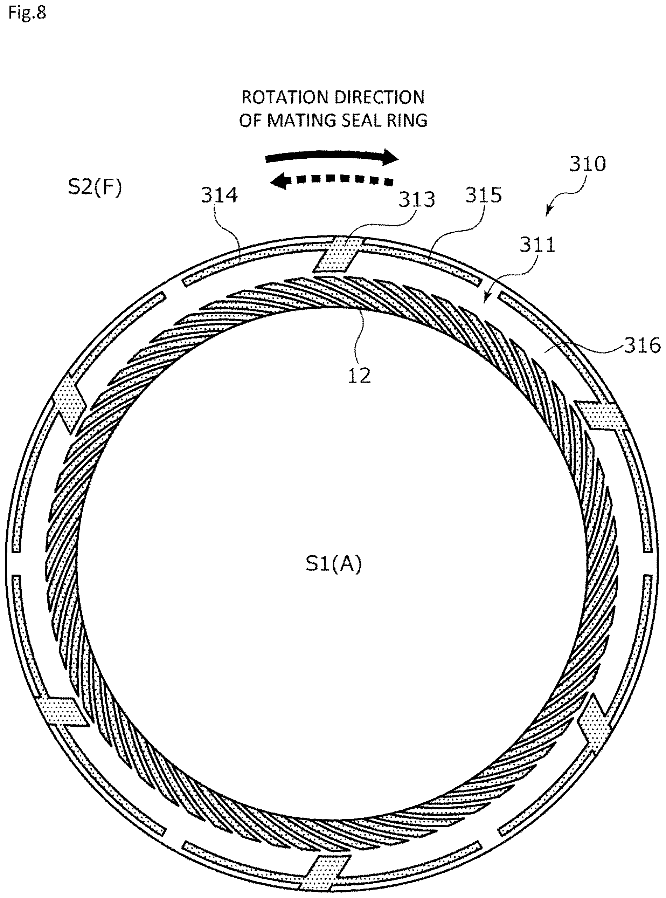

Next, a sliding element according to a fourth embodiment of the present invention will be described with reference to FIG. 8. Incidentally, the description of configurations that are the same as and overlap with the configurations of the first to third embodiments will be omitted.

A sliding surface 311 of a rotating seal ring 310 of the fourth embodiment is composed of a plurality of the spiral grooves 12, a plurality of introduction grooves 313, a plurality of first grooves 314, a plurality of second grooves 315, and lands 316.

The first groove 314 is provided at substantially the same position in the radial direction as the second groove 315, namely, on an extension direction of the second groove 315. Further, the first groove 314 is separated from the second groove 315 in the circumferential direction. In other words, the first groove 314 and the second groove 315 do not overlap each other in the radial direction.

Accordingly, when the rotating seal ring 310 rotates forward, a positive pressure is generated in the first groove 314. For that reason, the sealed fluid F in the introduction groove 313 is easily supplied into the first groove 314.

In addition, a negative pressure is generated in the second groove 315. For that reason, the sealed fluid F supplied into a gap between the sliding surfaces 311 and 21 from the first groove 314 is collected in the second groove 315.

In addition, when the rotating seal ring 310 rotates reverse, a positive pressure is generated in the second groove 315. For that reason, the sealed fluid F in the introduction groove 313 is easily supplied into the second groove 315.

In addition, a negative pressure is generated in the first groove 314. For that reason, the sealed fluid F supplied into the gap between the sliding surfaces 311 and 21 from the second groove 315 is collected in the first groove 314.

In such a manner, the positions of the first groove and the second groove in the radial direction may be changed as appropriate.

### {Fifth embodiment}

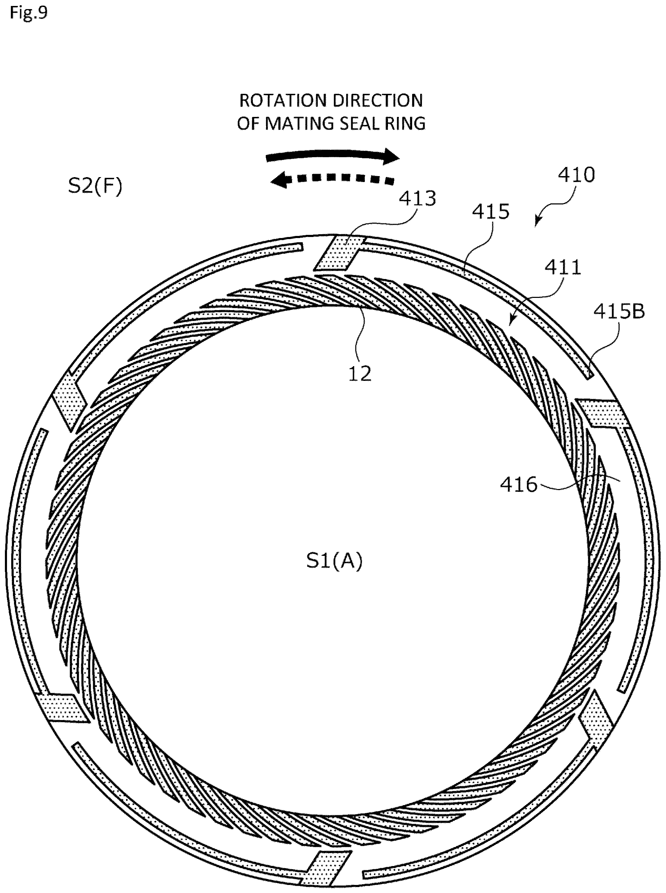

Next, a sliding element according to a fifth embodiment of the present invention will be described with reference to FIG. 9. Incidentally, the description of configurations that are the same as and overlap with the configurations of the first to fourth embodiments will be omitted.

A sliding surface 411 of a rotating seal ring 410 of the fifth embodiment is composed of a plurality of the spiral grooves 12, a plurality of introduction grooves 413, a plurality of second grooves 415, and lands 416.

A closed end portion 415B of the second groove 415 extends to the vicinity of the adjacent introduction groove 413 located on the forward rotation direction side.

Accordingly, when the rotating seal ring 410 rotates forward, the sealed fluid F is supplied into a gap between the sliding surfaces 411 and 21 from the introduction groove 413 and the second groove 415.

In addition, when the rotating seal ring 410 rotates reverse, the sealed fluid F supplied into the gap between the sliding surfaces 411 and 21 from the second groove 415 is collected in the adjacent introduction groove 413 located on a downstream side in the flow direction.

Further, the sealed fluid F in the introduction groove 413 is easily supplied into the second groove 415 due to a positive pressure generated in the second groove 415.

In such a manner, the groove portion may be composed of only the second groove. Similarly, the groove portion may be composed of only the first groove.

### {Sixth embodiment}

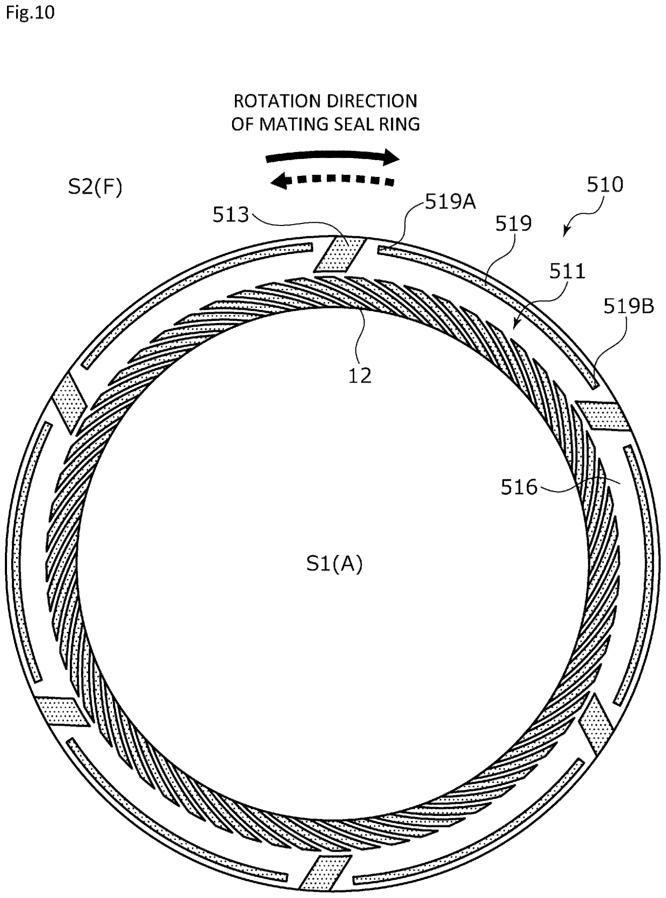

Next, a sliding element according to a sixth embodiment of the present invention will be described with reference to FIG. 10. Incidentally, the description of configurations that are the same as and overlap with the configurations of the first to fifth embodiments will be omitted.

A sliding surface 511 of a rotating seal ring 510 of the sixth embodiment is composed of a plurality of the spiral grooves 12, a plurality of introduction grooves 513, a plurality of third grooves 519 as the groove portion, and lands 516.

Similarly to the second grooves 15 of the first embodiment, the third grooves 519 are evenly disposed on the radially outer side of the sliding surface 511.

The third groove 519 is a groove extending in the circumferential direction concentrically with the rotating seal ring 510. In addition, the third groove 519 includes a closed end portion 519A located on the reverse rotation direction side, and a closed end portion 519B located on the forward rotation direction side. Namely, the third groove 519 does not communicate with the introduction groove 513 located on the reverse rotation direction side and with the introduction grooves 513 located on the forward rotation direction side, the introduction grooves 513 being adjacent to the third groove 519 in the circumferential direction.

When the rotating seal ring 510 rotates forward, a positive pressure is generated at the closed end portion 519A, and a negative pressure is generated at the closed end portion 519B.

Accordingly, the sealed fluid F supplied into a gap between the sliding surfaces 511 and 21 from the introduction groove 513 on the forward rotation direction side is collected at the closed end portion 519B located on a downstream side in the flow direction. In addition, the sealed fluid F that has flowed into the gap between the sliding surfaces 511 and 21 from the closed end portion 519A is collected in the introduction groove 513 on the reverse rotation direction side located on the downstream side in the flow direction.

In addition, when the rotating seal ring 510 rotates reverse, a negative pressure is generated at the closed end portion 519A, and a positive pressure is generated at the closed end portion 519B.

Accordingly, the sealed fluid F supplied into the gap between the sliding surfaces 511 and 21 from the introduction groove 513 on the reverse rotation direction side is collected at the closed end portion 519A located on a downstream side in the flow direction. In addition, the sealed fluid F supplied into the gap between the sliding surfaces 511 and 21 from the closed end portion 519B is collected in the introduction groove 513 on the forward rotation direction side located on the downstream side in the flow direction.

In such a manner, the groove portion may be configured to be able to assist the introduction groove in collecting the sealed fluid F, and may not communicate with the introduction groove.

### {Seventh embodiment}

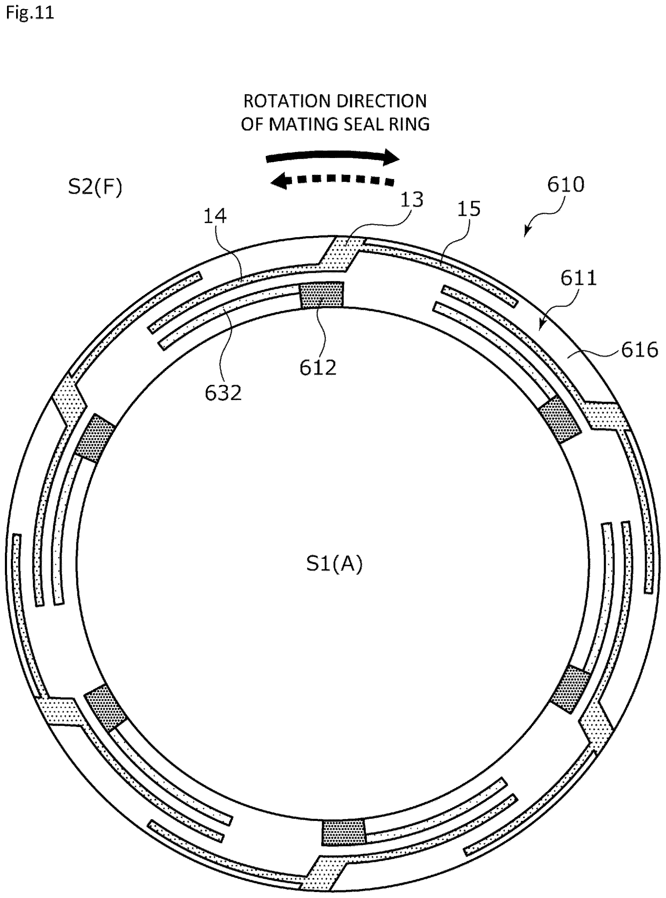

Next, a sliding element according to a seventh embodiment of the present invention will be described with reference to FIG. 11. Incidentally, the description of configurations that are the same as and overlap with the configurations of the first to sixth embodiments will be omitted.

A sliding surface 611 of a rotating seal ring 610 of the seventh embodiment is composed of a plurality of deep grooves 612 that are part of dynamic pressure generation grooves, Rayleigh steps 632 that are part of the dynamic pressure generation grooves, a plurality of the introduction grooves 13, a plurality of the first grooves 14 that are part of the groove portion, a plurality of the second grooves 15 that are part of the groove portion, and lands 616.

The deep groove 612 is a rectangular groove communicating with the inner space S1 at an opening end portion on the radially inner side of the deep groove 612 and extending from an opening end portion of the deep groove 612 in a radially outward direction. The deep grooves 612 are evenly disposed on the radially inner side of the sliding surface 611.

The depth of the deep groove 612 is constant in an extension direction. In addition, the depth of the deep groove 612 is deeper than the depth of the introduction groove 13, the first groove 14, and the second groove 15. For that reason, the deep grooves 612 are marked with high density of dots in FIG. 11.

The Rayleigh step 632 is an arcuate groove extending from an opening end portion in the reverse rotation direction concentrically with the rotating seal ring 610. The Rayleigh steps 632 are evenly disposed on the radially inner side with respect to the radial center of the sliding surface 611 and the first grooves 14.

The forward rotation direction side of the Rayleigh step 632 is the opening end portion communicating with the reverse rotation direction side of a radially outer end of the deep groove 612 in the radial direction. Further, the reverse rotation direction side of the Rayleigh step 632 is a closed end portion that is closed.

The depth of the Rayleigh step 632 is constant in an extension direction. In addition, the depth of the Rayleigh step 632 is shallower than the depth of the introduction groove 13, the first groove 14, and the second groove 15. For that reason, the Rayleigh steps 632 are marked with low density of dots in FIG. 11.

Accordingly, when the rotating seal ring 610 rotates forward, the atmosphere A in the Rayleigh step 632 moves toward the closed end portion, and flows into a gap between the sliding surfaces 611 and 21 from the closed end portion, so that a positive pressure is generated.

In addition, the atmosphere A is always stored in the deep groove 612. Accordingly, the atmosphere A stably flows into the Rayleigh step 632. For that reason, the Rayleigh step 632 can stably generate a positive pressure.

In such a manner, the dynamic pressure generation groove is not limited to the spiral groove 12, and may be changed as appropriate.

Incidentally, the depths of the deep groove 612 and the Rayleigh step 632 may be changed as appropriate.

### {Eighth embodiment}

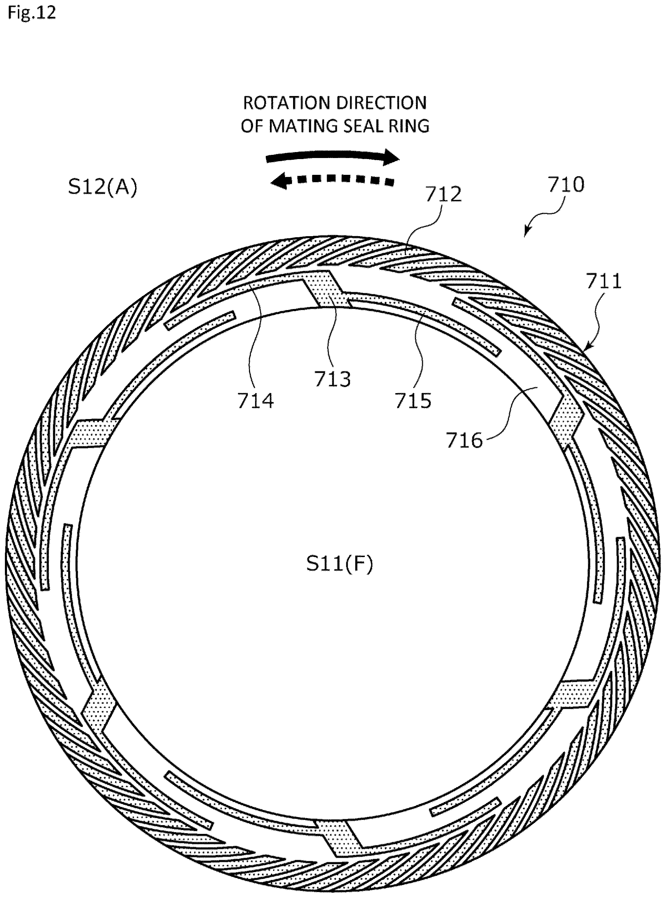

Next, a sliding element according to an eighth embodiment of the present invention will be described with reference to FIG. 12. Incidentally, the description of configurations that are the same as and overlap with the configurations of the first to seventh embodiments will be omitted.

A mechanical seal of the eighth embodiment is a so-called outside mechanical seal in which the sealed fluid F exists in an inner space S11 and the atmosphere A exists in an outer space S12.

A sliding surface 711 of a rotating seal ring 710 is composed of a plurality of spiral grooves 712, a plurality of introduction grooves 713, a plurality of first grooves 714, a plurality of second grooves 715, and lands 716.

The spiral grooves 712 are evenly disposed on the radially outer side of the sliding surface 711. The spiral groove 712 communicates with the outer space S12 at an opening end portion on the radially outer side of the spiral groove 712, and extends to the reverse rotation direction side with respect to the communication location of the spiral groove 712.

The introduction grooves 713 are evenly disposed on the radially inner side of the sliding surface 711. The introduction groove 713 communicates with the inner space S11 at an opening end portion on the radially inner side of the introduction groove 713, and extends to the reverse rotation direction side and in the radially outward direction with respect to the communication location of the introduction groove 713.

The first grooves 714 are evenly disposed on the radially inner side with respect to the radial center of the sliding surface 711 and the spiral grooves 712. The first groove 714 communicates with a radially inner end portion of a reverse rotation-side wall of the introduction groove 713 at an opening end portion on the forward rotation direction side, and extends in the reverse rotation direction with respect to the communication location of the first groove 714.

The second grooves 715 are evenly disposed on the radially inner side of the sliding surface 711. The second groove 715 communicates with a region near the center of the radially inner side of a forward rotation-side wall of the introduction groove 713 at an opening end portion located on the reverse rotation direction side, and extends to the forward rotation direction side with respect to the communication location of the second groove 715.

When the rotating seal ring 710 rotates forward, a positive pressure is generated at a closed end portion of the spiral groove 712.

The introduction groove 713 introduces the sealed fluid F into a gap between the sliding surfaces 711 and 21. In addition, a positive pressure is generated at a closed end portion of the first groove 714. Further, a negative pressure is generated at a closed end portion of the second groove 715.

Accordingly, regardless of whether the relative rotation is forward rotation at low speed or the relative rotation is forward rotation at high speed, lubricity between a pair of the sliding surfaces 711 and 21 is improved.

In addition, when the rotating seal ring 710 rotates reverse, a negative pressure is generated at the closed end portion of the first groove 714. Further, a positive pressure is generated at the closed end portion of the second groove 715.

Accordingly, the sealed fluid F is collected in the introduction groove 713 through the first groove 714 and the second groove 715.

In such a manner, the pair of sliding surfaces including the dynamic pressure generation groove, the introduction groove, and the groove portion may be applied to an outside mechanical seal.

The embodiments of the present invention have been described above; however, the specific configurations are not limited to the embodiments, and modifications or additions that are made without departing from the scope of the present invention are included in the present invention.

For example, in the first to eighth embodiments, the mechanical seal has been described as an example of the sliding element; however, the present invention may be applied to other mechanical seals for general industrial machines, automobiles, water pumps, and the like. In addition, the present invention is not limited to the mechanical seal, and may be applied to sliding elements other than the mechanical seal, such as a slide bearing.

In addition, in the first to eighth embodiments, the configuration in which the dynamic pressure generation groove, the introduction groove, the first groove, and the second groove are formed on the rotating seal ring has been described; however, the present invention is not limited thereto, and the dynamic pressure generation groove, the introduction groove, the first groove, and the second groove may be formed on the stationary seal ring. In addition, the dynamic pressure generation groove may be formed on one of the rotating seal ring and the stationary seal ring, and the introduction groove, the first groove, and the second groove may be formed on the other of the rotating seal ring and the stationary seal ring.

Incidentally, the sealed fluid flows relative to the sliding surface of the stationary seal ring in the same direction as the relative rotation direction. As a result, in the configuration in which the introduction groove, the first groove, and the second groove are formed on the stationary seal ring, the first groove extends from the introduction groove in the forward rotation direction, and the second groove extends from the introduction groove in the reverse rotation direction. Namely, when the relative rotation is forward rotation, the first groove is a groove on a side into which the sealed fluid flows from the introduction groove, and the second groove is a groove on a side from which the sealed fluid flows into the introduction groove.

In addition, in the first to eighth embodiments, the sealed fluid F has been described as a high-pressure liquid, but is not limited thereto, and may be a gas or a low-pressure liquid or may be in the form of a mist that is a mixture of liquid and gas.

In addition, in the first to eighth embodiments, the fluid on the leakage side has been described as the atmosphere that is a low-pressure gas, but is not limited thereto, and may be a liquid or a high-pressure gas or may be in the form of a mist that is a mixture of liquid and gas.

In addition, in the first to eighth embodiments, the configuration in which a positive pressure or a negative pressure is generated at the respective closed end portions of the first groove and the second groove has been described; however, the present invention is not limited thereto, and the first groove and the second groove may be configured such that little or no positive pressure or negative pressure is generated.

In addition, in the first to eighth embodiments, the first groove and the second groove have been described as having an arcuate shape as an example, but is not limited thereto, and may have a straight line shape or a polygonal line shape, and the shape thereof may be changed as appropriate.

### {REFERENCE SIGNS LIST}

10 Rotating seal ring
11 Sliding surface
12 Spiral groove (dynamic pressure generation groove)
13, 13' Introduction groove
14, 14' First groove (groove portion)
15, 15' Second groove (groove portion)
20 Stationary seal ring
21 Sliding surface
110 to 710 Rotating seal ring
111 to 711 Sliding surface
113 to 713 Introduction groove
217 First introduction groove
218 Second introduction groove
314, 714 First groove (groove portion)
415, 715 Second groove (groove portion)
519 Third groove (groove portion)
612 Deep groove (dynamic pressure generation groove)
632 Rayleigh step (dynamic pressure generation groove)
712 Spiral groove (dynamic pressure generation groove)
A Atmosphere
F Sealed fluid
M Mechanical seal
S1, S11 Inner space (space on leakage side)
S2, S12 Outer space (space on sealed fluid side)

## Claims

1. A sliding element, comprising:
a pair of sliding members of which sliding surfaces rotate and slide relative to each other,
wherein at least one of the sliding surfaces is provided with introduction grooves for low-speed rotation, each of the introduction grooves communicating with a space on a sealed fluid side,
at least one of the sliding surfaces is provided with a dynamic pressure generation groove for high-speed rotation, the dynamic pressure generation groove communicating with a space on a leakage side, and
the sliding surface provided with the introduction grooves is further provided with a groove portion disposed on the sealed fluid side with respect to the dynamic pressure generation groove and allowing a sealed fluid to flow between the introduction grooves adjacent to each other.

2. The sliding element according to claim 1,
wherein the groove portion includes first grooves each extending from each of the introduction grooves and second grooves each extending from each of the introduction grooves in a direction opposite to a direction in which the first grooves extend.

3. The sliding element according to claim 2,
wherein the first grooves and the second grooves extend in an arcuate shape.

4. The sliding element according to claim 2 or 3,
wherein an end portion of the first groove extending from each of the introduction grooves is disposed on the leakage side with respect to an end portion of the second groove extending from adjacent one of the introduction grooves.

5. The sliding element according to claim 2 or 3,
wherein the first groove extending from each of the introduction grooves is disposed to overlap with the second groove extending from adjacent one of introduction grooves in a radial directional view.

6. The sliding element according to claim 2 or 3,
wherein the introduction grooves, the first grooves, and the second grooves are equal to each other in depth.

7. The sliding element according to claim 1,
wherein the one of the sliding members includes the introduction grooves for low-speed rotation, the dynamic pressure generation groove for high-speed rotation, and the groove portion.
